# EUROPEAN PATENT APPLICATION

(11) **EP 1 667 458 A1**
(43) Date of publication of application: **07.06.2006**
(21) Application number: 05026121.3
(22) Date of filing: 30.11.2005
(51) Int. Cl.: H04N 7/24

(54) **AV equipment**

(30) Priority: 03.12.2004 JP 2004351345
(71) Applicant: SANYO ELECTRIC CO., LTD., Moriguchi-shi, Osaka (JP)
(72) Inventor: Watanabe, Masahide, Daito City Osaka 574-8534 (JP)
(74) Representative: Glawe, Delfs, Moll

(57) **Abstract**

There are provided means for starting to receive the broadcast input by searching an equipment outputting a broadcast among the AV equipments connected through the digital interface based on a broadcast input instruction, determining a broadcast output equipment serving as a source equipment and setting a broadcast input connection, means for specifying model information of the broadcast output equipment, based on the ID information acquired at the time of searching from the broadcast output equipment serving as the source equipment and information acquired at the time of bus resetting, and means for displaying an operation panel to operate the broadcast output equipment, based on the model information of the specified broadcast output equipment.

## Description

### BACKGROUND OF THE INVENTION

### 1. Field of the Invention

The present invention relates to an AV equipment receiving a broadcast input.

### 2. Description of the Background Art

In order to display contents recoded in a tape in a D-VHS on a DTV, it is necessary to set a logical connection between them in IEEE1394 network.

In setting the connection, a plug by which a logical signal is connected to the AV equipment connected to the IEEE 1394 is used. Such connection includes (1) point-to-point connection in which one output plug and one input plug are connected through a channel, and (2) broadcast connection in which a broadcast-out connection connecting one output plug to one channel, and a broadcast-in connection connecting one input plug to one channel are combined.

The channel is one of fields contained in a header of a isochronous packet to transfer a stream formatted in TS (Transport Stream) or DV (Digital Video), for example, and it is used for identifying the isochronous packet.

It is functionally classified into a source function on the transmission side of the video, a sink function on the reception side of the video, and a controller function to control a source equipment. When it is assumed that the DTV is a controller, the point-to-point connection is implemented by designating the D-VHS which is a connection partner. The direction of the point-to-point connection becomes opposite directions at the time of playback and recording. At the time of playback, the D-VHS functions as a source and the DTV functions as a sink. Meanwhile, at the time of recording, the DTV functions as a source and the D-VHS functions as a sink. After the point-to-point connection is set, the operations such as playback, stop, fast-forward, and rewinding are performed from the operation panel and state information such as a tape running state and a tape count value is acquired on the operation panel on the side of the DTV.

Meanwhile, in a case the broadcast input is received on the side of the DTV, when the DTV is to receive the broadcast input, an equipment (D-VHS) which performs the broadcast output is searched from the AV equipments connected to IEEE1394 bus. When the equipment outputting the broadcast is found, the broadcast connection is set and the contents of the broadcast output equipment are displayed on the DTV

The broadcast input is advantageous in that it is not necessary to designate a connection partner as compared with the point-to-point connection. In a system in which a plurality of D-VHSs and a plurality of DTVs are connected through the 1395 network, in a case a video image from the D-VHS is to be outputted to the plurality of DTVs by switching the D-VHS, when each DTV receives the broadcast input, it is not necessary to designate the D-VHS each time the D-VHS is switched.

Meanwhile, in the point-to-point connection, control of the connection partner such as stop, fast-forward, and playback can be performed and a state of the connection partner such as a tape counter can be acquired.

However, although the broadcast output equipment can control itself, it has not been considered that it is controlled by another equipment.

### SUMMARY OF THE INVENTION

It is an object of the present invention to provide an AV equipment which can control a broadcast output equipment and acquire state information thereof.

An AV equipment receiving a broadcast input in an AV system to which a plurality of AV equipments are connected through a digital interface according to the present invention includes first means for acquiring ID information and model information of another AV equipment connected through the digital interface at the time of bus resetting, second means for starting to receive the broadcast input by searching an equipment outputting a broadcast among the AV equipments connected through the digital interface based on a broadcast input instruction, determining a broadcast output equipment serving as a source equipment and setting a broadcast input connection, third means for specifying model information of the broadcast output equipment, based on the ID information acquired at the time of searching from the broadcast output equipment serving as the source equipment and information acquired by the first means, fourth means for displaying an operation panel to operate the broadcast output equipment, based on the model information of the broadcast output equipment specified by the third means, and fifth means for transmitting a command corresponding to an operation command inputted from the operation panel to the broadcast output equipment.

It is preferable to provide sixth means for acquiring state information corresponding to the model of the broadcast output equipment from the broadcast output equipment, based on the model information of the broadcast output equipment specified by the third means.

For example, the second means includes means for displaying a selection screen on which a user select a broadcast output equipment from the founded broadcast output equipments, and means for determining the broadcast output equipment selected from the selection screen as the broadcast output equipment serving as a source equipment of the broadcast input.

It is preferable to provide seventh means for storing the model information of the broadcast output equipment specified by the third means as information of the last broadcast output equipment together with the ID information, and eighth means for starting the broadcast input by transmitting a command corresponding to a playback command to the last broadcast output equipment and setting a broadcast input connection, based on the information of the last broadcast output equipment stored by the seventh means when the playback command is inputted from the operation panel after the broadcast output from the broadcast output equipment is stopped by a stop command from the operation panel and the broadcast input connection is cut.

For example, a digital interface is in conformity with IEEE 1394.

### BRIEF DESCRIPTION OF THE DRAWINGS

Fig. 1 is a block diagram showing a constitution example of an AV system;
Fig. 2 is a block diagram showing a constitution of control units and IEEE1394 related equipments in a DTV 1;
Fig. 3 is a flowchart showing processing procedures by a microcomputer 21 provided in the DTV 1 and particularly a flowchart showing processing procedures when the DTV 1 receives a broadcast input;
Fig 4 is a schematic view showing a BC output equipment selection screen when two BC output equipments are found;
Fig. 5 is a schematic view showing an example of an operation panel displayed when the BC output equipment is a playback equipment for a tape such as D-VHS; and
Fig. 6 is a schematic view showing a confirmation screen to confirm whether playback is performed from the last broadcast output equipment or not.

### DESCRIPTION OF THE PREFERRED EMBODIMENTS

An embodiment of the present invention will be described with reference to the drawings, hereinafter.

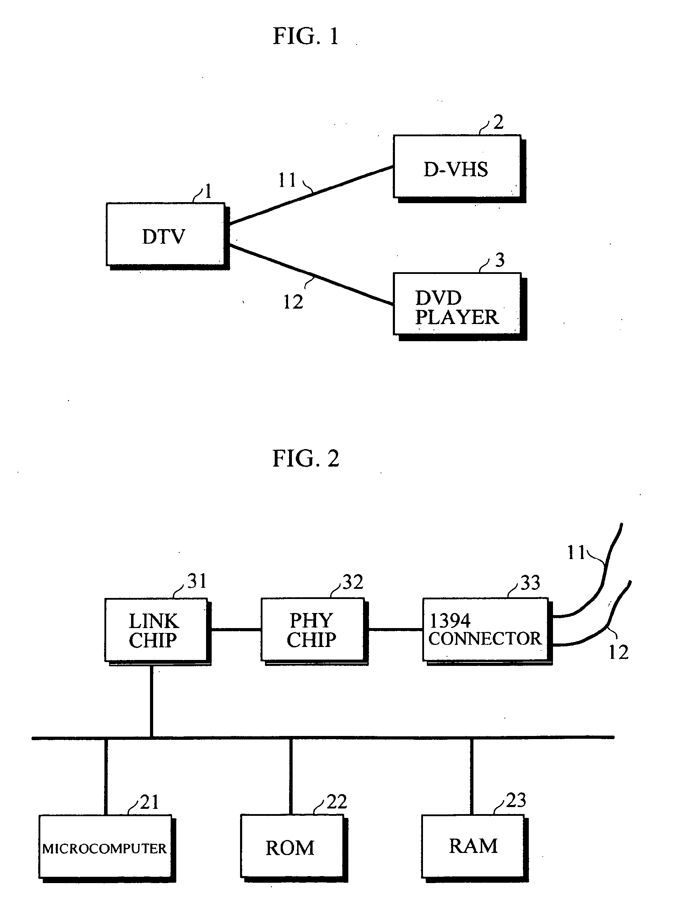

Fig. 1 shows a constitution example of an AV system.

According to this example, a D-VHS 2 which is a playback equipment for a tape is connected to a DTV 1 through an IEEE1394 cable 11, and a DVD player 3 which is a playback equipment for a disk is connected to the DTV 1.

Fig. 2 shows a constitution of control units and IEEE 1394 related equipments in the DTV 1.

The control units include a microcomputer 21, a ROM 22 and a RAM 23. The IEEE1394 related equipments include a LINK chip 31, a PHY chip 32, and 1394 connector 33.

Programs including an IEEE1394 program and necessary data are stored in the ROM 23. Data required in executing the program is temporally stored in the RAM 23. When a power supply is turned on, the microcomputer 21 expands the program stored in the ROM 22 on the RAM 23 and executes the program.

The LINK chip 31 mounts a link function defined in IEEE Std1394-1995. The PHY chip 32 mounts a physical layer defined in IEEE Std1394-1995. The LINK chip 31 and the PHY chip 32 are integrated to be one chip in some cases. The IEEE1394 cables 11 and 12 are connected to the IEEE 1394 connector 34.

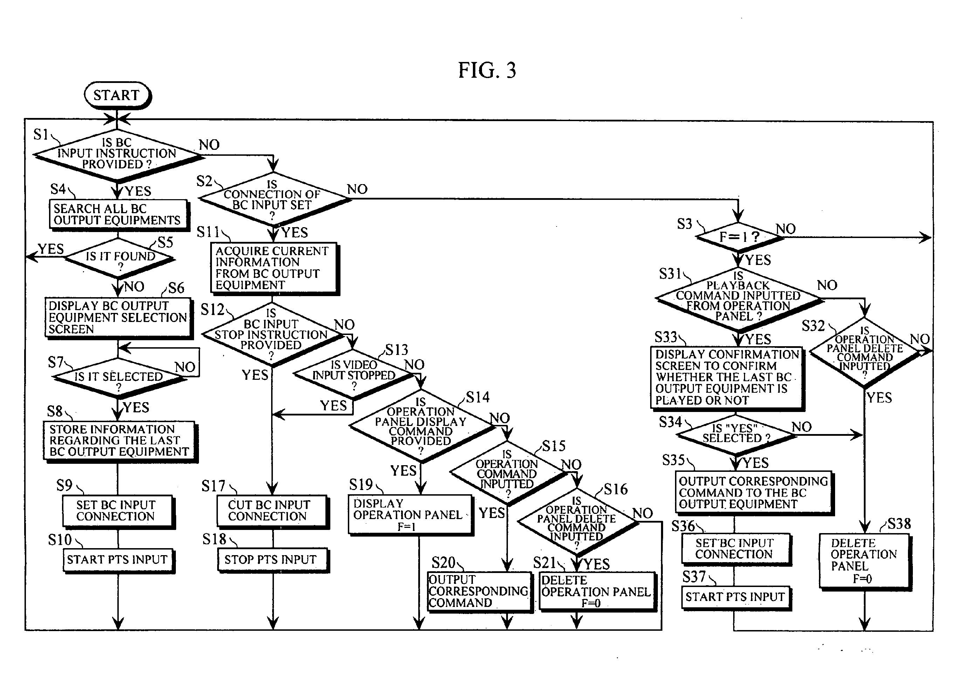

Fig. 3 shows processing procedures by the microcomputer 21 provided in the DTV 1 and more particularly shows processing procedures in which the DTV 1 receives a broadcast input.

In addition, when a bus is reset (when the power supply is turned on, and a connection is changed), it is assumed that a node ID, a GUID , a manufacturer name, model information are obtained from each equipment connected through a digital interface of IEEE1394 and the obtained information is retained as a table. The model information includes information such as a model name and distinction between the tape and the disk.

First, it is determined whether an instruction of the broadcast input (BC input) is provided or not at step S1. This instruction is provided by remote control from a user and the like. When the instruction of the broadcast input is not provided, it is determined whether a connection of the broadcast input is set or not at step S2. When the connection of the broadcast input is not set, it is determined whether a flag F is set or not at step S3.

The flag F shows whether an operation panel displayed at the time of the broadcast inputting is displayed at present or not, and when the operation panel displayed at the time of the broadcast inputting is displayed at present, the flag F is set (F = 1) and when it is not, the flag F is reset (F = 0). When the flag F is reset, the operation returns to the step S1.

When it is determined that the instruction of the broadcast input is provided at the step S1, an equipment which outputs a broadcast (BC output equipment) is searched at step S4. Here, all BC output equipments are searched. When the BC output equipment is searched, it is determined whether a bcc (broadcast connection counter) flag of oPCR which is an output flag of the equipment connected to the IEEE1394 is set to "1" or not.

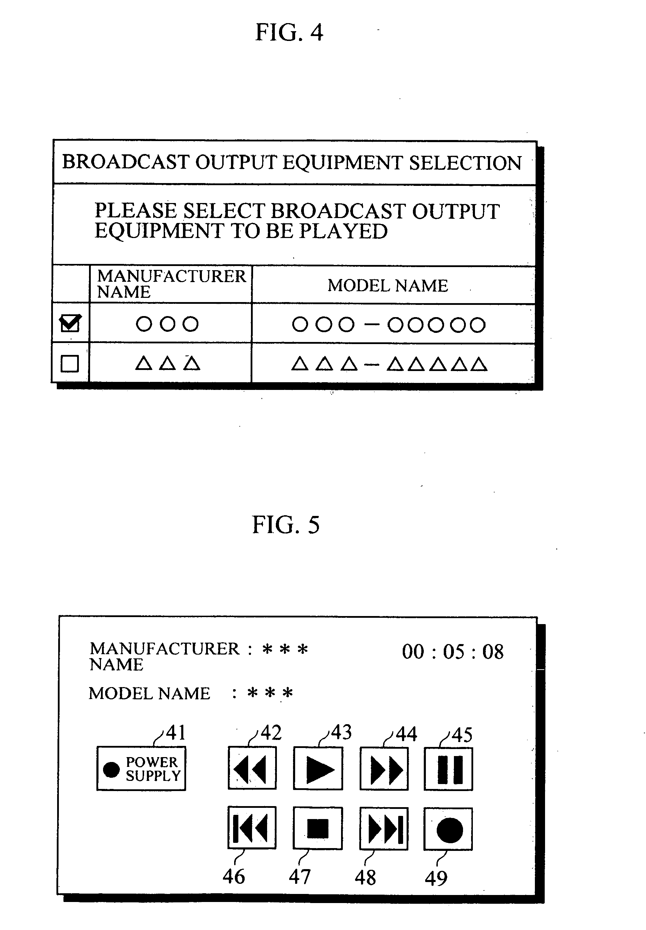

When the BC output equipment is not found, the operation returns to the step S1. When the BC output equipment is found, a BC output equipment selection screen is displayed on a monitor of the DTV 1. Fig. 4 shows the BC output equipment selection screen when two BC output equipments were found. On the BC output equipment selection screen, a check box, a manufacturer name, and a model name are displayed for each BC output equipment. The user checks the check box of a desired BC output equipment to select the BC output equipment. In addition, even when only one BC output equipment is found, the BC output equipment selection screen is also displayed to inform the user of the kind of the equipment.

Thus, when the desired BC output equipment is selected at step S7, information (node ID, GUID, manufacturer name and model information) related to that BC output equipment is specified based on the node IC obtained at the time of searching from the selected BC output equipment and information related to each equipment obtained at the time of bus resetting, and the specified information is temporally stored in the RAM as information regarding the BC output equipment selected just before (the last BC output equipment) at step S8. Then, the BC input connection is set at step S9. More specifically, the bcc flag of an iPCR which is the input flag is set to "1" and a channel number in which the selected BC output equipment outputs the broadcast is set to a "ch" of the iPCR. Then, a PTS (Partial Transport Stream) input is started at step S10. Then, the operation returns to the step S1.

Thus, when the broadcast input is started, it is determined that the connection setting of the broadcast input is set at the step S2, and current information (state information) corresponding to the model information is acquired from the BC output equipment at step S11. In order to acquire the current information, a command corresponding to the BC output equipment is outputted (transmitted to the BC output equipment). When the BC output equipment is the D-VHS, for example, an AV command defined in AV/C Tape Recorder/Player Subunit is outputted so that a tape counter, a tape running state, and a power supply state are obtained. When the broadcast input is started, the current information is acquired from the BC output equipment every predetermined time.

Then, it is determined whether an instruction of a broadcast input stop is provided or not at step S12, whether a video input is stopped or not at step S13, whether an operation panel display command is inputted or not as step S14, whether an operation command is inputted from the operation panel or not at step S15, and whether an operation panel delete command is inputted or not at step S16.

When it is determined that the instruction of the broadcast input stop is provided at the step S12 (Step S12 YES) or it is determined that the video input is stopped at the step S13 (Step S13 YES), the BC input connection is cut at step S17. More specifically, the bcc flag of the input flag iPSR is set to "0". Then, the PTS (Partial Transport Stream) input is stopped at step S18. Then the operation returns to the step S1.

When it is determined that the operation panel display command is inputted at the step 14 (Step 14 YES), the operation panel corresponding to the model information of the BC output equipment is displayed and the flag F is set to "1"at step S19. Then, the operation returns to the step S1. In the case where the BC output equipment is the playback equipment for the tape such as the D-VHS, an operation panel shown in Fig. 5 is displayed on the monitor of the DTV 1. According to the example shown in Fig 5, operation buttons such as a power supply button 41, a rewind playback button 42, a playback button 43, a fast-forward playback button 44, a pause button 45, a skipped rewind playback button 46, a stop button 47, a skipped fast-forward playback button 48, and a record button 49 are displayed and a manufacture name, a model name and a tape count of the BC output equipment are displayed on the operation panel. When the rewind playback button 42 is pressed during playback, a rewind playback command is generated, and when it is pressed during stoppage, a rewind command is generated. When the fast-forward playback button 44 is pressed during the playback, a fast-forward playback command is generated and when it is pressed during stoppage, a fast-forward command is generated. Thus, with the operation panel, the BC output equipment can be operated by remote control.

In addition, when the playback operation of the D-VHS is stopped by pressing the stop button 47, since the video is not inputted to the DTV 1 any more, the BC input connection is cut at the step S17. Thus, even when the playback button is pressed after that, the D-VHS of the BC output equipment cannot start the playback operation in a conventional equipment. However, according to this embodiment, as will be described below, even after the playback operation of the D-VHS of the BC output equipment is stopped, the playback operation can be started again.

When it is determined that the operation command is inputted from the operation panel at the step S15 (Step S15 YES), the AV command corresponding to the operation command inputted to the BC output equipment is outputted (transmitted) at step S20. Then, the operation returns to the step S1. When the BC output equipment is the playback equipment for the tape such as the D-VHS, the AV command includes a PLAY command (for playback, fast-forward playback, and rewinding playback, depending on an argument), a WIND command (for fast-forward playback, stop, and rewinding, depending on an argument), a FORWARD command (for skipped fast-forward playback), a BACKWARD command (for skipped rewinding playback), a RECORD command (for recording) and the like. When the BC output equipment is the playback equipment for the disk such as a DVD player, the AV command includes a PLAY command (for playback), a SEARCH command (for searching), a STOP command (for stop), and the like.

When it is determined that the operation panel delete command is inputted at the step S16 (Step S16 YES), the operation panel is deleted and the flag F is reset (F = 0) at step S21. Then, the operation returns to the step S1.

When "NO" are determined at all steps S12, S13, S14, S15 and S16, the operation returns to the step S1 also.

Meanwhile, when the stop button on the operation panel is pressed and the AV command corresponding to it is outputted while the DTV 1 receives the broadcast input from the playback equipment for the tape such as the D-VHS, the playback operation of the D-VHS of the BC output equipment is stopped. Thus, since the video is not inputted to the DTV 1 any more, the BC input connection is cut at the step S17. A description will be made of a case the playback button on the operation panel is pressed after that.

First, a description will be made of an operation when the operation panel is displayed even after the BC input connection was cut.

When the BC input connection is cut, "NO" is determined at the step S1 and "NO" is also determined at the step S2. At the step S3, it is determined whether the flag F is set or not. Since the operation panel is displayed, "YES" is determined at the step S3 and it is determined whether the playback command is inputted from the operation panel or not at step S31. When the playback command is not inputted from the operation panel, it is determined whether the operation panel delete command is inputted or not at step S32. When the operation panel delete command is not inputted, the operation returns to the step S1.

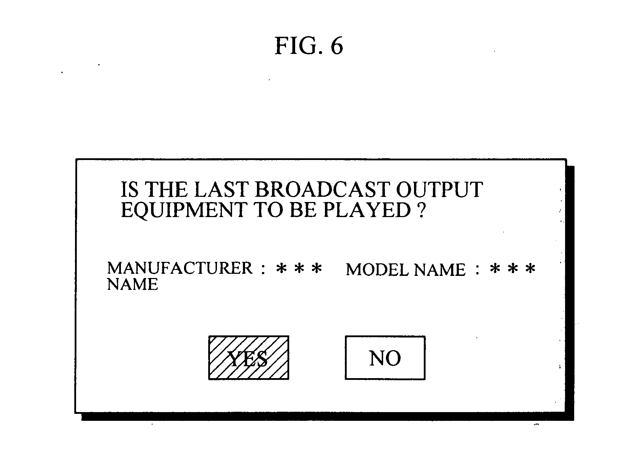

That is, when the operation panel is displayed even after the BC input connection was cut, the operations at steps S1, S2, S3, S31 and S32 are repeated. When the playback command is inputted, "YES" is determined at the step S31. In this case, a confirmation screen to confirm whether the last broadcast output equipment is played or not is displayed on the monitor of the DTV 1 as shown in Fig. 6 at step S33. When the user selects "YES" on the confirmation screen at step S34, with the information regarding the last BC output equipment temporally stored in the RAM 23, the playback command is outputted (transmitted) to the last BC output equipment at step S35 and the BC input connection is set at step S36. Then, the PTS (Partial Transport Stream) input is started at step S37. Then, the operation returns to the step S1. Thus, even after the playback operation of the BC output equipment is stopped, the playback operation of the BC output equipment can be performed again.

When "NO" is selected on the confirmation screen displayed at the step S33, the operation panel is deleted and the flag F is reset (F = 0) at the step S38, and then the operation returns to the step S1.

In addition, while the operations at S1, S2, S3, S31 and S32 are performed repeatedly, when the operation panel delete command is inputted, "YES" is determined at the step S32, so that the operation panel is deleted and the flag F is reset (F = 0) at the step S38, and then the operation returns to the step S1.

## Claims

1. An AV equipment receiving a broadcast input in an AV system to which a plurality of AV equipments are connected through a digital interface, **characterized by** comprising:
first means for acquiring ID information and model information of another AV equipment connected through the digital interface at the time of bus resetting;
second means for starting to receive the broadcast input by searching an equipment outputting a broadcast among the AV equipments connected through the digital interface based on a broadcast input instruction, determining a broadcast output equipment serving as a source equipment and setting a broadcast input connection;
third means for specifying model information of the broadcast output equipment, based on the ID information acquired at the time of searching from the broadcast output equipment serving as the source equipment and the information acquired by the first means;
fourth means for displaying an operation panel to operate the broadcast output equipment, based on the model information of the broadcast output equipment specified by the third means; and
fifth means for transmitting a command corresponding to an operation command inputted from the operation panel, to the broadcast output equipment.

2. The AV equipment according to claim 1, **characterized by** comprising sixth means for acquiring state information corresponding to the model of the broadcast output equipment from the broadcast output equipment, based on the model information of the broadcast output equipment specified by the third means.

3. The AV equipment according to claim 1, **characterized in that** the second means comprises means for displaying a selection screen on which a user select a broadcast output equipment from the founded broadcast output equipments, and means for determining the broadcast output equipment selected from the selection screen as the broadcast output equipment serving as a source equipment of the broadcast input.

4. The AV equipment according to claim 1, **characterized by** comprising:
seventh means for storing the model information of the broadcast output equipment specified by the third means as information of the last broadcast output equipment together with the ID information; and
eighth means for starting the broadcast input by transmitting a command corresponding to a playback command to the last broadcast output equipment and setting a broadcast input connection, based on the information of the last broadcast output equipment stored by the seventh means when the playback command is inputted from the operation panel after the broadcast output from the broadcast output equipment is stopped by a stop command from the operation panel and the broadcast input connection is cut.

5. The AV equipment according to claim 1, **characterized in that** a digital interface is in conformity with IEEE 1394.
